# FASCICULE DE BREVET EUROPEEN

(11) **EP 0 960 051 B1**
(45) Date de publication et mention de la délivrance du brevet: **03.03.2004**
(21) Numéro de dépôt: 98959978.2
(22) Date de dépôt: 14.12.1998
(51) Int. Cl.: B64D 29/08, B64C 7/02, E05C 19/06

(54) **ENSEMBLE PROPULSEUR A CAPOTS DE SOUFFLANTE MUNIS DE SECURITES DE MAINTIEN ET DE POSITIONNEMENT, POUR AERONEF**
FLUGZEUG-TRIEBWERKSANLAGE MIT SICHERHEITSEINRICHTUNGEN FÜR DAS STELLEN UND FESTHALTEN VON DEN GEBLÄSEHAUBEN
AIRCRAFT PROPULSION UNIT WITH FAN COWLS EQUIPPED WITH MAINTAINING AND POSITIONING SAFETY ELEMENTS

(30) Priorité: 16.12.1997 FR 9715930
(43) Date de publication de la demande: 01.12.1999
(73) Titulaire: AIRBUS France, 31060 Toulouse Cedex 03 (FR)
(72) Inventeur: PORTE, Alain, F-31770 Colomiers (FR)
(74) Mandataire: Poulin, Gérard
(86) Numéro de dépôt international: PCT/FR1998/002718
(87) Numéro de publication internationale: WO 1999/030969

(56) Documents cités:
- FR-A- 2 379 433
- FR-A- 2 734 540
- GB-A- 2 259 954
- GB-A- 2 267 122

## Description

### Domaine technique

L'invention concerne un ensemble propulseur, tel qu'un turboréacteur, destiné à équiper un aéronef.

Plus précisément, l'invention concerne un ensemble propulseur comprenant un moteur central, une nacelle placée autour du moteur selon un axe longitudinal commun, ainsi qu'un mât par lequel le moteur est relié à un élément de structure de l'aéronef. Cet élément de structure peut être soit un élément de voilure lorsque l'ensemble propulseur est implanté sous la voilure, soit un élément arrière du fuselage, lorsque l'ensemble propulseur est implanté latéralement à l'arrière du fuselage.

L'invention s'applique à tout ensemble propulseur de ce type, dans lequel l'accès aux équipements du moteur s'effectue en ouvrant deux capots, de section transversale en forme de C, qui font partie intégrante de la nacelle et sont articulés, directement ou indirectement, sur le mât supportant le moteur.

### Etat de la technique

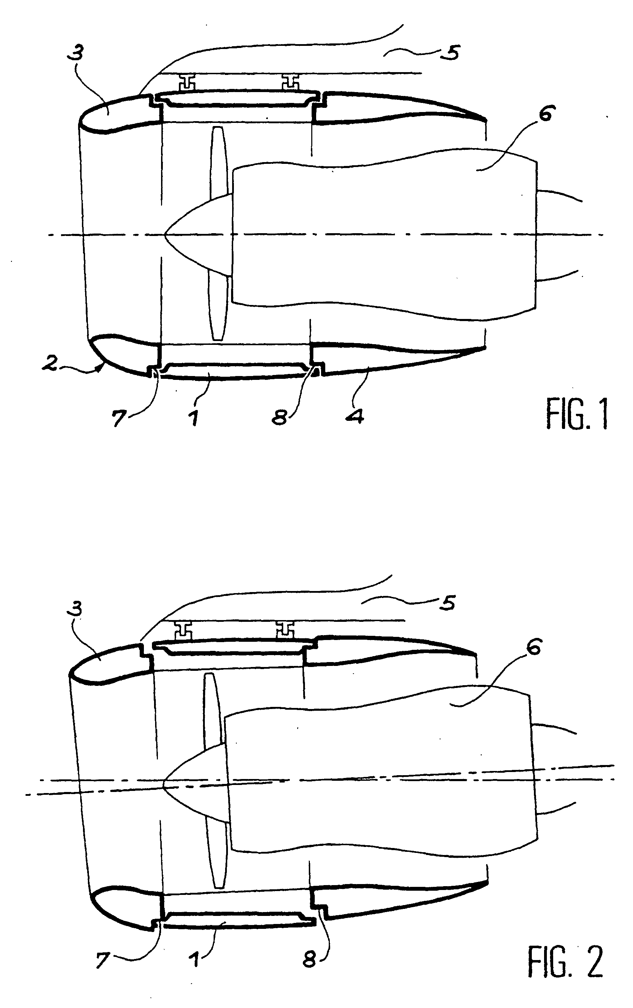

Comme l'illustre schématiquement la figure 1 des dessins annexés, dans un ensemble propulseur d'aéronef tel qu'un turboréacteur à double flux, la maintenance est généralement assurée au moyen de deux capots pivotants 1 qui font partie intégrante de la nacelle 2. Ces capots 1 sont intercalés entre une structure d'entrée d'air 3, formant l'avant de la nacelle 2 dans le sens de l'écoulement de l'air, et une partie arrière 4 de la nacelle, dans laquelle sont généralement logés des inverseurs de poussée. Les capots 1 sont articulés sur le mât 5 soit directement, soit par l'intermédiaire de pièces fixes appartenant à la nacelle 2.

Le mât 5 est généralement une poutre servant à relier le moteur central 6 à un élément de voilure de l'aéronef. Les capots 1 sont alors articulés sur le mât par leurs bords supérieurs.

Dans certains cas, plus rares, le mât 5 est une poutre latérale servant à relier le moteur central 6 à l'arrière du fuselage de l'aéronef. Les capots 1 sont alors articulés sur le mât par un de leurs bords latéraux.

L'ouverture des capots 1 permet d'assurer la maintenance des équipements du moteur 6. Lorsqu'ils sont fermés, les capots 1 assurent la continuité des formes aérodynamiques extérieures de la nacelle 2.

La fermeture des capots 1 est assurée par des moyens de verrouillage (non représentés) qui relient des bords de raccordement des capots, opposés à ceux par lesquels ils sont articulés sur le mât 5. Ces moyens de verrouillage relient donc les bords inférieurs des capots 1 lorsque l'ensemble propulseur est placé sous la voilure d'un aéronef.

Dans la pratique, les moyens de verrouillage sont généralement constitués par plusieurs verrous à crochets répartis le long des bords de raccordement. Chaque verrou comprend un crochet monté sur l'un des capots 1 et une chape portée par l'autre capot 1. Les crochets sont montés sur l'un des capots de façon pivotante, afin de venir coiffer les chapes en vis-à-vis, dans l'état verrouillé des verrous. Dans cet état verrouillé, les verrous exercent une tension entre les deux capots. Cette tension, appliquée selon une direction circonférentielle par rapport à l'axe longitudinal de l'ensemble propulseur, est appelée "tension de ceinture".

Par ailleurs, lorsque les capots sont en position fermée, leurs bords avant et arrière ceinturent deux surfaces d'appui circulaires de faible longueur et de grand diamètre. L'une 7 de ces surfaces d'appui est formée à l'arrière de la structure d'entrée d'air 3 de la nacelle 2. La deuxième surface d'appui 8 est formée à l'avant de la partie arrière 4 de la nacelle.

Théoriquement, l'effort de ceinture exercé par les verrous sur les capots 1 devrait maintenir constamment ces derniers en appui sur toute la périphérie des surfaces d'appui 7 et 8, en appliquant sur celles-ci une charge circonférentielle.

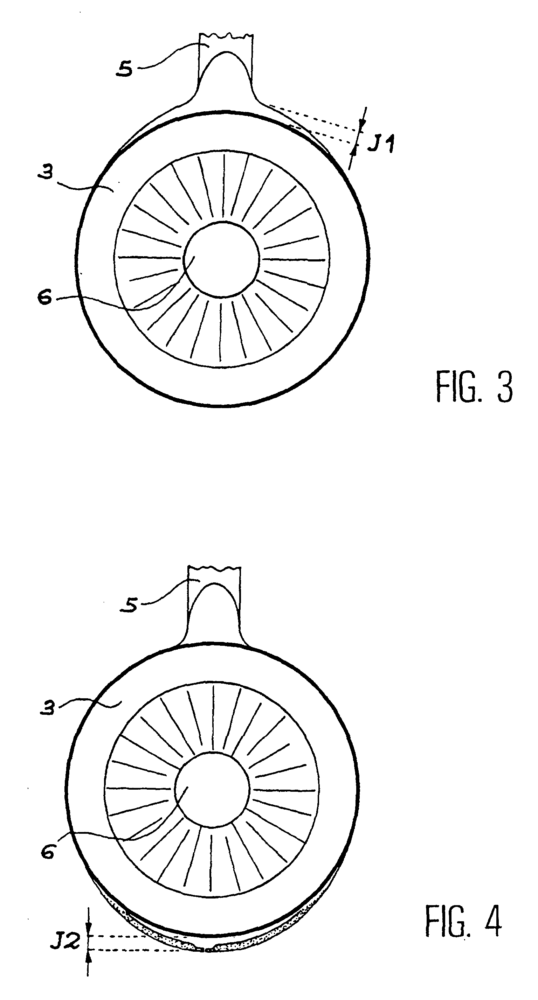

Dans la pratique et comme l'illustrent les figures 2 et 3 des dessins annexés, l'application de la charge circonférentielle est altérée, voire interdite par la flexion du moteur 6 et de la structure d'entrée d'air 3 sous leur propre poids, lorsque l'avion est au sol.

Afin d'éviter leur démontage lorsqu'on dépose le moteur 6, les capots 1 sont articulés sur le mât 5 et non directement sur le moteur. Les capots 1 sont donc indépendants des mouvements de faible amplitude du moteur 6. Du fait que les différentes structures constituant l'ensemble propulseur présentent une certaine souplesse, qui tend à augmenter au fil des années, toutes ces structures fléchissent sous leur propre poids lorsque l'aéronef est au sol. Comme l'illustrent schématiquement les figures 2 et 3, l'avant du moteur 6 ainsi que la structure d'entrée d'air 3 fixée sur ce dernier occupent alors une position basse par rapport aux capots 1. La zone d'appui circonférentielle entre la structure d'entrée d'air 3 et les bords avant des capots est alors localisée dans la partie basse de l'ensemble propulseur. Par conséquent, il existe un écart J1 (figure 3) entre le bord supérieur de chacun des capots 1 et l'enveloppe extérieure de la structure d'entrée d'air 3.

Lorsque l'aéronef est en vol, le moteur 6 et la structure d'entrée d'air 3 se retrouvent en position plus haute sous l'effet de la poussée et des forces aérodynamiques, comme l'illustre la figure 4. La surface d'appui circulaire 7 formée sur la structure d'entrée d'air 3 vient alors en butée sur la partie haute des bords avant des capots 1. Etant donné que ces derniers ne sont liés directement ni au moteur 6, ni à la structure d'entrée d'air 3, ils ne peuvent pas suivre ce déplacement vertical vers le haut de la structure d'entrée d'air. Il se produit, donc en partie basse, un désaffleurement entre les bords avant des capots 1 et la surface d'appui circulaire 7 formée sur la structure d'entrée d'air 3. Ce désaffleurement, volontairement exagéré sur la figure 4, y est désigné par la référence J2.

Lorsque le désaffleurement J2 est léger, il se traduit par une érosion importante des bordures frontales des capots 1, dans la partie supérieure de ces derniers lorsque l'aéronef est au sol et dans leur partie inférieure lorsque l'aéronef est en vol.

En cas de désaffleurement J2 plus accentué, il se produit, en vol, une entrée d'air qui vient perturber la ventilation de la zone interne aux capots 1.

Enfin, en cas de désaffleurement J2 important, par exemple d'environ 1 cm, l'entrée d'air a pour effet de pressuriser les faces internes des capots 1, ce qui peut conduire à la perte de ceux-ci, si l'un des verrous est mal réglé ou mal verrouillé.

Par ailleurs, l'intégrité de la fonction verrouillage exige que les deux parties de chaque verrou, c'est-à-dire le crochet lié à l'un des capots 1 et la chape liée à l'autre capot, soient en permanence en contact. Si cette condition n'est pas satisfaite, le crochet risque de se déconnecter. Ce risque apparaît notamment en cas de jeu trop important entre le crochet et la chape. En présence du désaffleurement J2 (figure 4), les vibrations du moteur 6 et les mouvements relatifs divers peuvent donc déconnecter les crochets, remettant ainsi en cause l'intégrité de la fonction de verrouillage qu'ils remplissent.

### Exposé de l'invention

L'invention a précisément pour objet un ensemble propulseur d'aéronef, tel qu'un turboréacteur, dont la conception originale permet d'éliminer tous les inconvénients de la technique antérieure qui viennent d'être exposés, et notamment d'éviter l'apparition d'un jeu radial entre la partie basse des capots et la structure d'entrée d'air lorsque l'avion est en vol, de façon à éviter une érosion accélérée du bord d'attaque des capots et un risque d'arrachement accidentel de ces derniers consécutif à une déconnexion des verrous à crochets.

Conformément à l'invention, ce résultat est obtenu au moyen d'un ensemble propulseur pour aéronef, comprenant un moteur, une nacelle placée autour du moteur selon un axe longitudinal commun, et un mât supportant le moteur, la nacelle incluant deux capots, de section transversale en forme de C, articulés sur le mât et aptes à être reliés l'un à l'autre, en position fermée, par des moyens de verrouillage, caractérisé par le fait que des moyens de guidage avant sont interposés entre les capots et une pièce portée par le moteur ou par une structure d'entrée d'air de la nacelle, à proximité des moyens de verrouillage et d'un bord avant des capots, de façon à s'opposer à un déplacement relatif entre les capots et le moteur, axialement et radialement par rapport audit axe longitudinal, lorsque les capots sont en position fermée.

Dans une forme de réalisation préférée de l'invention, les moyens de guidage avant comprennent au moins une butée avant solidaire de la pièce portée par le moteur ou par la structure d'entrée d'air et un guide avant solidaire de chacun des capots. Chacun des guides avant coopère alors automatiquement avec la butée avant lorsque les capots sont en position fermée.

Dans ce cas, les moyens de guidage avant peuvent comprendre, selon le cas, soit une butée avant unique, soit deux butées avant, chacun des guides avant coopérant alors avec l'une de ces butées lorsque les capots sont en position fermée.

Dans la forme de réalisation préférée de l'invention, la butée avant est avantageusement fixée sur une virole circulaire et sur une bride radiale matérialisant l'extrémité arrière de la structure d'entrée d'air de la nacelle.

Un réglage de la position de la butée avant peut alors être obtenu en interposant des cales de réglage radial et axial respectivement entre la butée avant et la virole circulaire et entre la butée avant et la bride radiale.

Avantageusement, lorsque les moyens de verrouillage ne sont pas verrouillés, les moyens de guidage avant maintiennent les capots dans une position naturelle, sensiblement différente de la position fermée, dans laquelle des bords adjacents des capots sont écartés l'un de l'autre de manière visible. Cet agencement permet très aisément au personnel qui effectue la maintenance de vérifier visuellement que les moyens de verrouillage sont bien verrouillés.

La position naturelle des capots permettant ce contrôle visuel peut être définie par un contact par gravité entre chacun des guides avant et la butée avant, de telle sorte qu'un passage en position fermée nécessite l'application d'un effort circonférentiel entre les capots par les moyens de verrouillage.

Dans la forme de réalisation préférée de l'invention, des moyens de guidage arrière sont également interposés entre les capots et une deuxième pièce portée par le moteur ou par une partie arrière de la nacelle, à proximité des moyens de verrouillage d'un bord arrière des capots, de façon à s'opposer à un déplacement relatif entre les capots et le moteur, radialement par rapport à l'axe longitudinal du moteur, lorsque les capots sont en position fermée.

Dans ce cas, les moyens de guidage arrière comprennent avantageusement une butée arrière, solidaire de la deuxième pièce portée par le moteur ou par la partie arrière de la nacelle, et un guide arrière solidaire de chacun des capots, chaque guide arrière coopérant automatiquement avec la butée arrière lorsque les moyens de verrouillage sont en position fermée.

La butée arrière peut notamment être fixée sur une deuxième virole circulaire et sur une deuxième bride, matérialisant une extrémité avant de la partie arrière de la nacelle.

En variante, la butée arrière peut aussi être fixée directement sur le moteur.

### Brève description des dessins

On décrira à présent, à titre d'exemple non limitatif, une forme de réalisation préférée de l'invention, en se référant aux dessins annexés, dans lesquels :
- la figure 1, déjà décrite, est une vue en coupe longitudinale schématique, qui représente un ensemble propulseur conventionnel, dans son état théorique non déformé ;
- la figure 2, déjà décrite, est une vue en coupe schématique comparable à la figure 1 montrant, de façon volontairement accentuée, l'état réel de l'ensemble propulseur lorsque l'aéronef est au sol ;
- la figure 3, déjà décrite, est une vue de devant d'un ensemble propulseur existant, dans le même état que sur la figure 2 lorsque l'aéronef est au sol ;
- la figure 4, déjà décrite, est une vue de devant comparable à la figure 3, représentant l'ensemble propulseur dans l'état qu'il occupe lorsque l'aéronef est en vol ;
- la figure 5 est une vue en perspective éclatée qui représente un ensemble propulseur conforme à l'invention, fixé par un mât sous une voilure d'aéronef ;
- la figure 6 est une section transversale de l'ensemble propulseur de la figure 5, selon un plan passant par les capots, ces derniers étant représentés respectivement en position ouverte et en position fermée sur la gauche et sur la droite de la figure ;
- la figure 7 est une coupe selon un plan de coupe comparable à la section de la figure 6, qui représente à plus grande échelle, vus de l'arrière vers l'avant, les moyens de guidage avant conformes à l'invention, respectivement dans la position naturelle et dans la position fermée des capots sur la gauche et sur la droite de la figure ;
- la figure 8 est une vue de dessus, en coupe partielle, des moyens de guidage avant illustrés sur la figure 8, dans les mêmes positions des capots que sur cette dernière figure ;
- la figure 9 est une vue en coupe selon la ligne IX-IX de la figure 8 ;
- la figure 10 est une vue en coupe transversale, comparable à la figure 7 mais de l'avant vers l'arrière, illustrant les moyens de guidage arrière conformes à l'invention ; et
- la figure 11 est une vue de dessus représentant notamment les moyens de guidage arrière de la figure 10 et l'un des verrous à crochets.

### Description détaillée d'une forme de réalisation préférée de l'invention

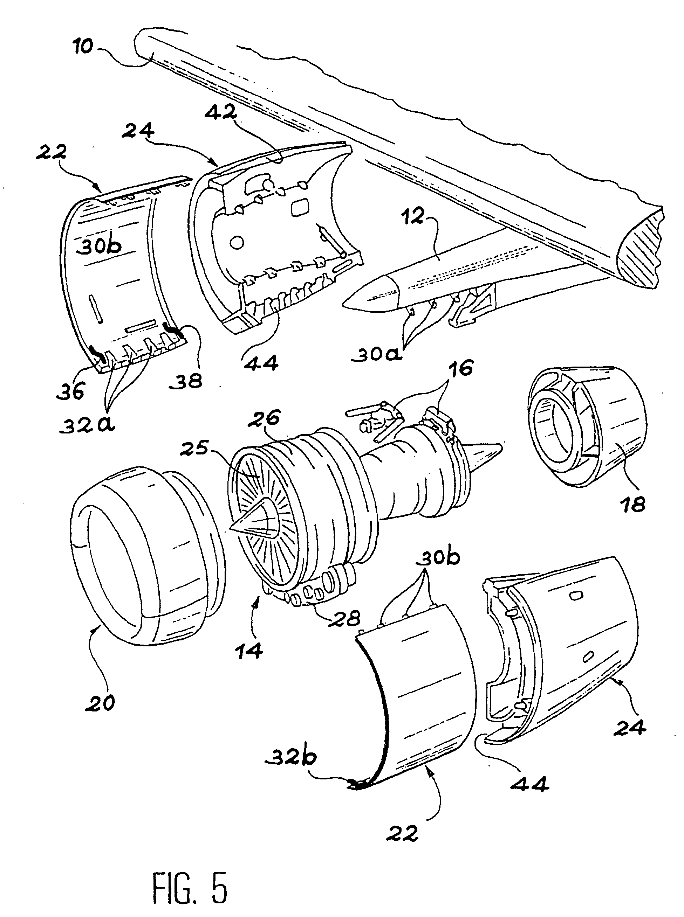

Sur la figure 5, la référence 10 désigne un élément de voilure d'un aéronef. Un ensemble propulseur conforme à l'invention, illustré sous une forme éclatée, est suspendu sous cet élément de voilure 10 par un mât 12.

L'ensemble propulseur comprend un moteur central 14, fixé sous le mât 12 par des dispositifs de fixation 16, selon un agencement bien connu des spécialistes et qui ne fait pas partie de l'invention. Dans sa partie arrière, le moteur central 14 comprend une tuyère 18, représentée ici de façon séparée.

Dans sa partie avant, le moteur central 14 comporte une soufflante 25. La soufflante 25 est entourée par un carter de soufflante 26. Celui-ci est solidarisé du carter fixe du moteur 14 par des bras (non représentés) orientés radialement par rapport à l'axe longitudinal du moteur.

Les équipements 28 du moteur 14 sont généralement fixés au carter de soufflante 26, en dessous de celui-ci.

Une nacelle, dont les différents éléments constitutifs sont illustrés sous une forme éclatée sur la figure 5, est disposée coaxialement autour du moteur central 14, selon un agencement classique. L'axe longitudinal commun au moteur 14 et à la nacelle forme ainsi l'axe de l'ensemble propulseur. En allant de l'avant vers l'arrière, dans le sens de l'écoulement de l'air lorsque l'aéronef est en vol, la nacelle comprend une structure d'entrée d'air 20, deux capots 22, appelés "capots de soufflante", et une partie arrière formée ici de deux capots 24, appelés "capots inverseurs".

La structure d'entrée d'air 20 est fixée directement sur une structure fixe du moteur 14, par son extrémité arrière. Cette structure fixe est constituée par le carter de soufflante 26.

Les capots de soufflante 22 présentent une section transversale sensiblement semi-circulaire en forme de C. Ils sont articulés sur le mât 12 par leurs bords supérieurs, au moyen de ferrures d'articulation 30a, 30b. Leur fermeture est assurée par des moyens de verrouillage 32a, 32b qui relient l'un à l'autre les bords inférieurs des capots lorsque ces moyens de verrouillage sont fermés. Comme on le verra plus en détail par la suite, les moyens de verrouillage sont des verrous à crochets, constitués de crochets 32a montés sur l'un des capots 22 et de chapes 32b montées sur l'autre capot. Lorsque les capots de soufflante 22 sont fermés, ils assurent la continuité aérodynamique de l'enveloppe extérieure de la structure d'entrée d'air 20.

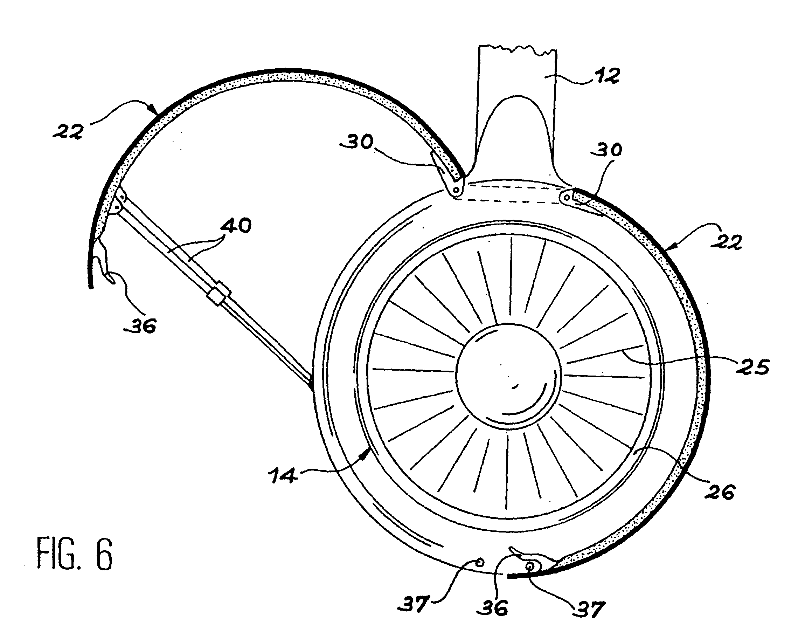

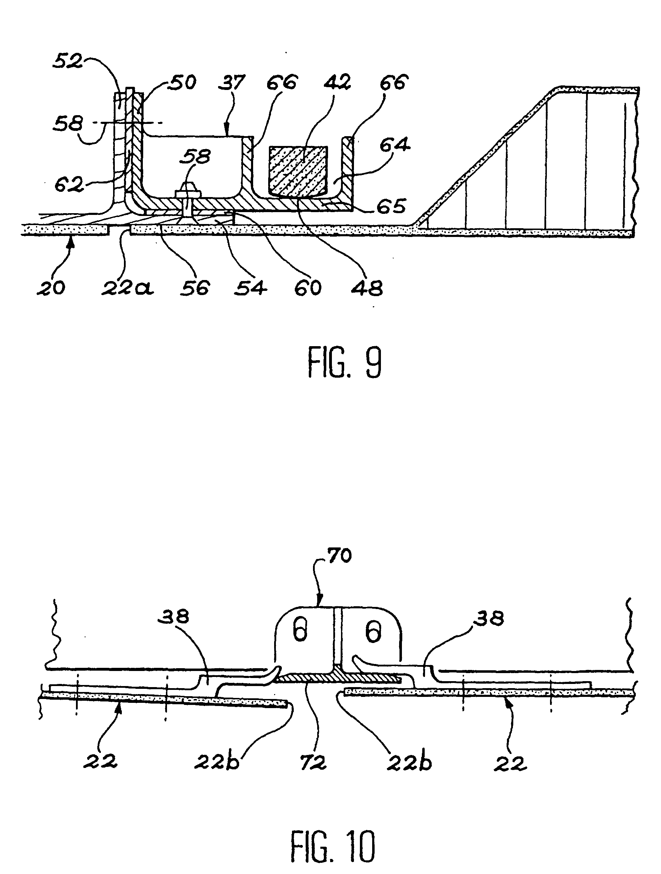

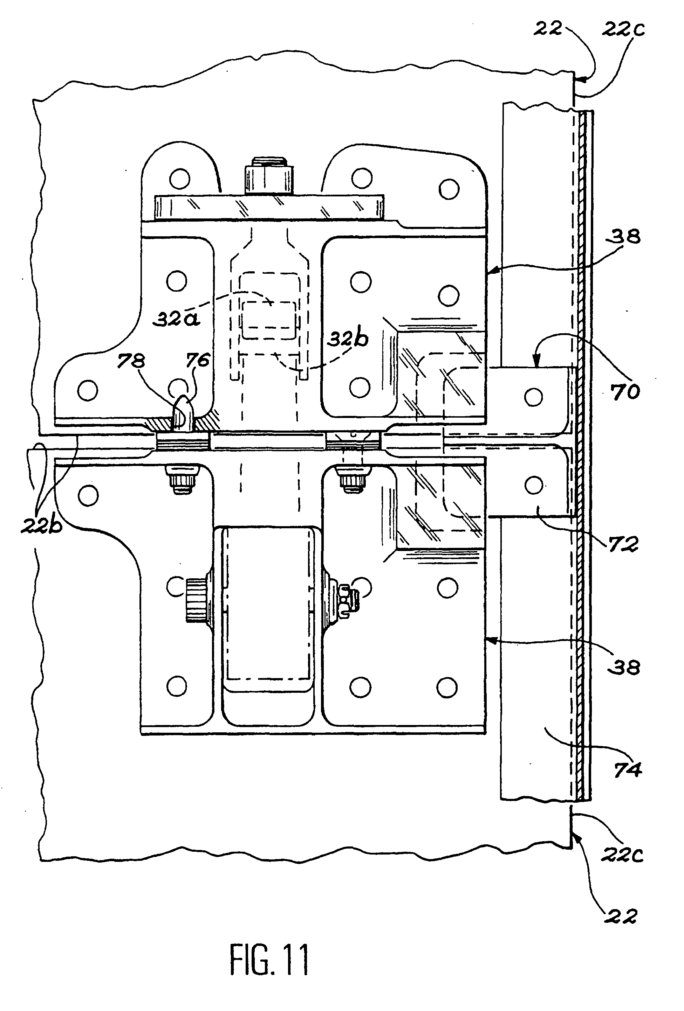

Conformément à l'invention et comme on le décrira plus en détail par la suite, cette continuité aérodynamique est garantie par la présence de moyens de guidage avant auxquels sont avantageusement associés des moyens de guidage arrière. Ces moyens de guidage avant et arrière comprennent notamment un guide avant 36 et un guide arrière 38, fixés sur chacun des capots de soufflante 22, au voisinage de leurs bords inférieurs et à proximité respectivement de leurs bords avant et arrière. Les moyens de guidage avant et arrière comprennent aussi des butées avant 37 (figure 6) et arrière 70 (figures 10 et 11).

L'ouverture des verrous constitués par les crochets 32a et par les chapes 32b autorise le pivotement des capots vers le haut autour des ferrures d'articulation 30a, 30b. La maintenance des équipements 28 du moteur 14 peut ainsi être assurée. Ce pivotement vers le haut des capots 22 est généralement assisté par des vérins 40, comme on l'a représenté sur la gauche de la figure 6.

Les deux capots inverseurs 24, qui constituent la partie arrière de la nacelle, sont également. articulés sur la mât 12 par des ferrures d'articulation 42. De plus, des verrous 44 relient les bords inférieurs des capots inverseurs 24 lorsque ces capots sont fermés.

Comme on l'a expliqué précédemment, lorsque les capots de soufflante 22 sont en position fermée, leurs bords avant et arrière ceinturent normalement des surfaces d'appui circulaires de grand diamètre et de faible longueur formées respectivement à l'arrière de la structure d'entrée d'air 20 et à l'avant de la partie arrière de la nacelle constituée ici par les capots inverseurs 24.

Les moyens de guidage avant et, de préférence, arrière permettent, conformément à l'invention, de garantir aussi bien au sol qu'en vol l'application des charges circonférentielles générée par la fermeture des moyens de verrouillage sur tout le contour de ces surfaces d'appui circulaires. A cet effet, les moyens de guidage avant et arrière sont interposés entre les capots de soufflante 22 et des pièces portées par le moteur 14, à proximité des moyens de verrouillage 32a, 32b et des bords avant et arrière des capots.

De façon plus précise, les moyens de guidage avant sont conçus pour s'opposer à un déplacement relatif entre les capots de soufflante 22 et le moteur 14, axialement et radialement par rapport à l'axe longitudinal de ce dernier, lorsque les capots 22 sont en position fermée.

Par ailleurs, lorsqu'ils existent, les moyens de guidage arrière sont conçus pour s'opposer à un déplacement relatif entre les capots de soufflante 22 et le moteur 14 (ou les capots inverseurs 24) radialement par rapport à l'axe longitudinal de ce dernier, lorsque les capots 22 sont en position fermée.

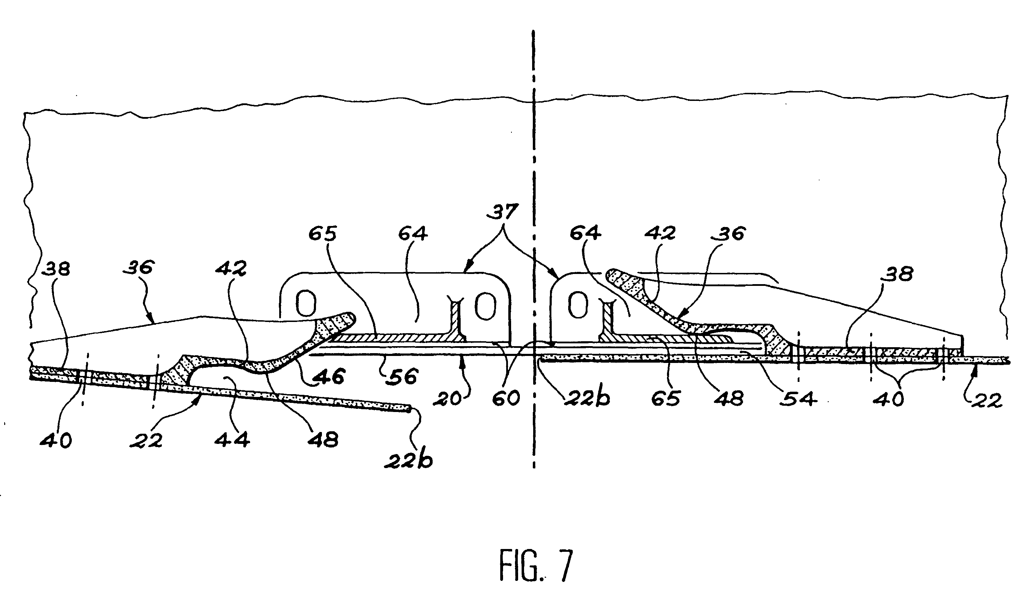

Une forme de réalisation préférée des moyens de guidage avant va à présent être décrite en détail en se référant aux figures 7 à 9.

Dans cette forme de réalisation préférée de l'invention et comme on l'a déjà brièvement décrit, les moyens de guidage avant comprennent un guide avant 36, fixé sur chacun des capots de soufflante 22, et deux butées avant 37, fixées sur la structure d'entrée d'air 20. Il est à noter qu'en variante, les deux butées 37 peuvent être remplacées par une butée unique, sans sortir du cadre de l'invention.

Chacun des guides avant 66 est fixé sur l'un des capots de soufflante 22, à proximité de son bord avant 22a et au voisinage de son bord de raccordement 22b, c'est-à-dire de son bord inférieur dans le cas d'un ensemble propulseur suspendu sous la voilure.

Chacun des guides avant 36 comprend un talon 38, prévu pour être fixé à l'intérieur du capot 22 correspondant, par exemple au moyen de rivets traversant des trous 40 prévus à cet effet dans le talon 38 et dans le capot 22.

Chacun des guides avant 36 comprend de plus une partie de guidage 42, qui prolonge le talon 38 vers le bord de raccordement 22b du capot 22, de façon à être écartée de ce capot, c'est-à-dire de telle sorte qu'un espace 44 est formé entre la partie de guidage 42 et le capot 22. Plus précisément, la partie de guidage 42 comprend une région attenante au talon 38, qui s'étend vers le bord de raccordement 22b du capot 22 sensiblement parallèlement à ce dernier, et une région d'extrémité qui s'éloigne progressivement du capot, de façon à former une rampe de guidage 46, sur sa face tournée vers le capot. Entre ces deux régions de la partie de guidage 42, le guide avant 36 présente un renflement 48, qui prolonge la rampe de guidage 46 et définit une zone de moindre épaisseur de l'espace 44.

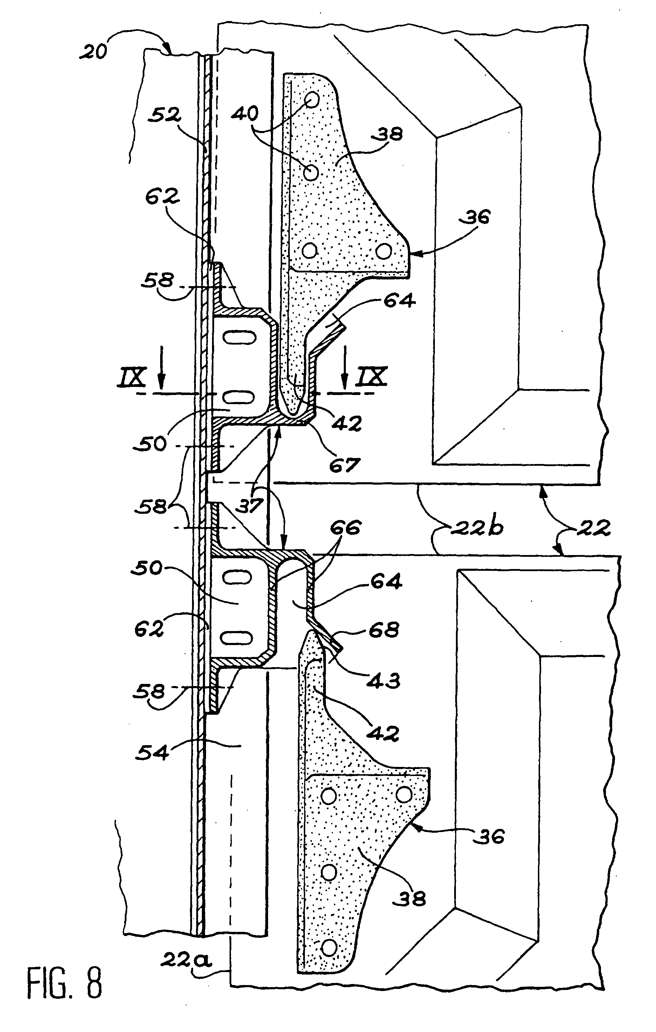

En vue de dessus, comme l'illustre notamment la figure 8, la région d'extrémité de la partie de guidage 42 présente une largeur sensiblement uniforme, terminée par une portion biseautée 43.

Chacun des guides avant 37 comprend une embase 50, par laquelle il est fixé sur l'extrémité arrière de la structure d'entrée d'air 20. Plus précisément, cette extrémité arrière est matérialisée par une bride radiale 52 tournée vers l'intérieur de l'ensemble propulseur et par une virole 54 qui fait saillie vers l'arrière à partir de la bride 52 et sur laquelle est formée la surface d'appui circulaire 56. L'embase 50 de la butée avant 37 est fixée à la fois sur la bride 52 et à l'intérieur de la virole 54, par exemple au moyen de rivets 58.

Il est à noter que des cales de réglage radial 60 et axial 62 peuvent avantageusement être interposées respectivement entre l'embase 50 et la virole 54 et entre l'embase 50 et la bride 52, comme l'illustrent les figures 7 à 9. Ces cales de réglage permettent d'ajuster la position de chacune des butées avant 37 avec une grande précision, lors de leur installation.

Chacune des butées avant 37 comprend un réceptacle 64, qui prolonge vers l'arrière l'embase 50. Ce réceptacle 64 présente une forme en creux prévue pour recevoir la région d'extrémité de la partie de guidage 42 du guide avant 36 correspondant. Ce réceptacle 64 comprend une première cloison 65, qui prolonge l'embase 50 parallèlement à la virole 54, ainsi que deux autres cloisons 66 qui s'étendent vers l'intérieur de l'ensemble propulseur, parallèlement à la bride 52, donnant ainsi au réceptacle 64 une section en forme de U sur la coupe radiale de la figure 9. Comme l'illustre la figure 8, les trois cloisons 65, 66 sont reliées par un fond 67 à l'extrémité du réceptacle 64 la plus proche du plan vertical médian de l'ensemble propulseur. En outre, à son extrémité opposée à ce fond 67, la cloison 66 la plus éloignée de l'embase 50 s'éloigne progressivement de cette dernière, pour former une rampe 68.

Comme on l'a illustré sur la gauche de la figure 7, l'agencement relatif entre les butées avant 37 et les guides avant 36 est tel que, sous l'effet du poids du capot 22, la région d'extrémité de la partie de guidage 42 vient normalement en appui, par sa rampe de guidage 46, contre le bord de la cloison 65 matérialisant l'extrémité ouverte du réceptacle 64 correspondant. Les guides avant 36 sont alors décalés légèrement vers l'arrière par rapport au fond de ce réceptacle 64, comme on l'a illustré dans le bas de la figure 8. La portion biseautée 43 est alors en appui contre la rampe 68.

Cette position d'appui naturelle est suffisamment différente de la position fermée des capots, illustrée à droite sur la figure 7 et dans le haut de la figure 8, pour que les opérateurs effectuant la maintenance puissent détecter aisément l'absence de fermeture des verrous par la simple constatation visuelle de l'écartement des bords 22b des capots.

Dans la position de fermeture des capots de soufflante 22, illustrée sur la droite de la figure 7 et en haut sur la figure 8, les parties de guidage 42 des guides avant 36 pénètrent dans les réceptacles 64 des butées avant 37, de façon telle que les cloisons 65 des réceptacles soient en contact de frottement contre les bossages 48 des partie de guidage. Un maintien relatif entre les extrémités inférieures des capots 22 et la structure d'entrée d'air 20 est ainsi assuré à la fois dans une direction radiale et dans une direction axiale par rapport à l'axe longitudinal de l'ensemble propulseur.

Le passage des capots 22 de leur position d'appui naturelle dans leur position fermée est guidé à la fois par la coopération de la rampe 46 avec le bord de la cloison 65 et par la coopération de la portion biseautée 43 avec la rampe 68. Dans la pratique, ce passage nécessite l'application d'un effort circonférentiel entre les capots 22 par les moyens de verrouillage 32a, 32b destinés à les relier l'un à l'autre. En d'autres termes, la venue des capots 22 dans leur position fermée implique la mise en oeuvre de ces moyens de verrouillage 32a, 32b.

Il est à noter que les moyens de guidage avant qui viennent d'être décrits sont automatiquement actifs lorsque les deux capots 22 sont liés l'un à l'autre par les moyens de verrouillage 32a, 32b. En outre, ces moyens de guidage avant laissent libre l'évolution du jeu circonférentiel entre les deux capots de soufflante 22.

On décrira à présent plus en détail, en se référant aux figures 10 et 11, les moyens de guidage arrière qui sont prévus, de préférence, entre les capots de soufflante 22 et la partie arrière de la nacelle.

Comme on l'a déjà brièvement décrit, ces moyens de guidage arrière comprennent un guide arrière 38, fixé sur chacun des capots 22, ainsi qu'une butée arrière 70, fixée soit sur la virole de soufflante 26, soit sur la partie arrière de la nacelle, matérialisée par les capots inverseurs 24.

Les guides arrière 38 sont fixés sur les capots de soufflante 22, à proximité de leurs bords arrière et au voisinage des moyens de verrouillage 32a, 32b. Ils présentent en section radiale, comme l'illustre la figure 10, une configuration pratiquement identique à celle des guides avant 36. En revanche, leur forme en vue de dessus est sensiblement différente, comme le montre une comparaison des figures 8 et 11. Cette différence s'explique par le fait que les moyens de guidage arrière ont seulement pour fonction de s'opposer à un déplacement des capots 22 selon une direction radiale par rapport à l'axe longitudinal de l'ensemble propulseur, lorsque les capots sont fermés. En effet, le maintien axial assuré par les moyens de guidage avant est suffisant pour assurer un maintien isostatique des capots.

Par ailleurs, la butée avant 70 comporte une paroi 72 parallèle à la virole 74 formant la surface d'appui circulaire sur laquelle viennent s'appliquer les bords arrière des capots 22, dans leur position fermée.

Dans l'état d'appui naturel des capots 22, illustré sur la gauche de la figure 10, les guides arrière 38 sont en appui contre les extrémités circonférentielles de la paroi 72, de telle sorte que l'écartement des bords inférieurs des capots 22 est également assuré à l'arrière de ceux-ci, malgré leur flexibilité naturelle.

Au contraire, lorsque les capots sont amenés en position fermée par l'actionnement des moyens de verrouillage, les parties de guidage des guides arrière 38 viennent en appui sur la face de la paroi 72 tournée vers l'intérieur de l'ensemble propulseur. Le maintien radial des capots dans le bas de leur partie arrière est ainsi également assuré.

Dans la position fermée des capots de soufflante 22, un pion de centrage 76, lié à l'un des capots, pénètre dans un trou 78 formé dans l'autre capot. Un positionnement relatif entre les bords inférieurs 22b des capots 22 est ainsi assuré.

Comme on l'a illustré sur la figure 11, les guides arrière 38 peuvent faire partie des pièces servant à supporter le crochet 32a et la chape 32b du verrou à crochet le plus proche des bords arrière 22c et des capots 22.

## Revendications

1. Ensemble propulseur pour aéronef, comprenant un moteur (14), une nacelle placée autour du moteur selon un axe longitudinal commun, et un mât (12) supportant le moteur, la nacelle incluant deux capots (22), de section transversale en forme de C, articulés sur le mât et aptes à être reliés l'un à l'autre, en position fermée, par des moyens de verrouillage (32a,32b), **caractérisé par le fait que** des moyens de guidage avant (36,37) sont interposés entre les capots (22) et une pièce portée par le moteur (14) ou par une structure d'entrée d'air (20) de la nacelle, à proximité des moyens de verrouillage (32a,32b) et d'un bord avant (22a) des capots, de façon à s'opposer à un déplacement relatif entre les capots et le moteur, axialement et radialement par rapport audit axe longitudinal, lorsque les capots sont en position fermée.

2. Ensemble propulseur selon la revendication 1, dans lequel les moyens de guidage avant comprennent au moins une butée avant (37) solidaire de la pièce portée par le moteur (14) ou par la structure d'entrée d'air (20), et un guide avant (36) solidaire de chacun des capots (22), chaque guide avant (36) coopérant automatiquement avec la butée avant (37) lorsque les capots (22) sont en position fermée.

3. Ensemble propulseur selon la revendication 2, dans lequel les moyens de guidage avant comprennent deux butées avant (37) solidaires de la pièce portée par le moteur (14) ou par la structure d'entrée d'air (20), chaque guide avant (36) coopérant avec l'une desdites butées lorsque les capots (22) sont en position fermée.

4. Ensemble propulseur selon la revendication 2, dans lequel les moyens de guidage avant comprennent une butée avant unique (37) solidaire de la pièce portée par le moteur (14) ou par la structure d'entrée d'air (20).

5. Ensemble propulseur selon l'une quelconque des revendications 2 à 4, dans lequel la butée avant (37) est fixée sur une virole circulaire (54) et sur une bride radiale (52) matérialisant une extrémité arrière de la structure d'entrée d'air (20) de la nacelle.

6. Ensemble propulseur selon la revendication 5, dans lequel des cales de réglage radial et axial (60,62) sont interposées, respectivement, entre la butée avant (37) et la virole circulaire (54) et entre la butée avant et la bride radiale (52).

7. Ensemble propulseur selon l'une quelconque des revendications précédentes, dans lequel, lorsque les moyens de verrouillage (32a,32b) ne sont pas verrouillés, les moyens de guidage avant (36,37) maintiennent les capots (22) dans une position naturelle, sensiblement différente de la position fermée, dans laquelle des bords adjacents (22b) des capots sont visiblement écartés l'un de l'autre.

8. Ensemble propulseur selon la revendication 7, combinée avec l'une quelconque des revendications 2 à 6, dans lequel la position naturelle des capots (22) est définie par un contact par gravité entre chaque guide avant (36) et la butée avant (37), de telle sorte qu'un passage en position fermée nécessite l'application d'un effort circonférentiel entre les capots (22) par les moyens de verrouillage (32a,32b).

9. Ensemble propulseur selon l'une quelconque des revendications précédentes, dans lequel des moyens de guidage arrière (38,70) sont interposés entre les capots (22) et une deuxième pièce portée par le moteur (14) ou par une partie arrière (24) de la nacelle, à proximité des moyens de verrouillage (32a,32b) et d'un bord arrière (22c) des capots, de façon à s'opposer à un déplacement relatif entre les capots et le moteur, radialement par rapport à l'axe longitudinal, lorsque les capots sont en position fermée.

10. Ensemble propulseur selon la revendication 9, dans lequel les moyens de guidage arrière comprennent une butée arrière (70), solidaire de la deuxième pièce portée par le moteur (14) ou par la partie arrière (24), et un guide arrière (38) solidaire de chacun des capots (22), chaque guide arrière coopérant automatiquement avec la butée arrière lorsque les moyens de verrouillage (32a,32b) sont en position fermée.

11. Ensemble propulseur selon la revendication 10, dans lequel la butée arrière (70) est fixée sur des capots inverseurs (24) matérialisant la partie arrière de la nacelle.

12. Ensemble propulseur selon la revendication 10, dans lequel la butée arrière (70) est fixée sur une virole de soufflante (26) du moteur (14).

## Patentansprüche

1. Antriebseinheit für ein Luftfahrzeug, umfassend einen Motor (14), einen um den Motor entlang einer gemeinsamen Längsachse herum angeordneten Rumpf, sowie eine den Motor tragende Strebe (12), wobei der Rumpf zwei Hauben (22) mit C-förmigem Querschnitt umfasst, die an der Strebe angelenkt und dazu ausgelegt sind, in einer geschlossenen Position durch Verriegelungsmittel (32a, 32b) miteinander verbunden zu werden, **dadurch gekennzeichnet, dass** vordere Führungsmittel (36, 37) zwischen den Hauben (22) und einem Element eingefügt sind, das vom Motor (14) oder von einer Lufteinlassstruktur (20) des Rumpfs getragen wird, und zwar in der Nähe der Verriegelungsmittel (32a, 32b) und eines vorderen Rands (22a) der Hauben, derart, dass sie einer Relativverlagerung zwischen den Hauben und dem Motor axial und radial bezüglich der Längsachse entgegenwirken, wenn die Hauben in der geschlossenen Position sind.

2. Antriebseinheit nach Anspruch 1, bei der die vorderen Führungsmittel wenigstens einen vorderen Anschlag (37) umfassen, der fest mit dem Element verbunden ist, das vom Motor (14) oder von der Lufteinlassstruktur (20) getragen wird, sowie eine vordere Führung (36), die fest mit jeder der Hauben (22) verbunden ist, wobei jede vordere Führung (36) automatisch mit dem vorderen Anschlag (37) zusammenwirkt, wenn die Hauben (22) in der geschlossenen Position sind.

3. Antriebseinheit nach Anspruch 2, bei der die vorderen Führungsmittel zwei vordere Anschläge (37) umfassen, die fest mit dem Element verbunden sind, das vom Motor (14) oder von der Lufteinlassstruktur (20) getragen wird, wobei jede vordere Führung (36) mit einem der Anschläge zusammenwirkt, wenn die Hauben (22) in der geschlossenen Position sind.

4. Antriebseinheit nach Anspruch 2, bei der die vorderen Führungsmittel einen einzigen vorderen Anschlag (37) umfassen, der fest mit dem Element verbunden ist, das vom Motor (14) oder von der Lufteinlassstruktur (20) getragen wird.

5. Antriebseinheit nach einem der Ansprüche 2 bis 4, bei der der vordere Anschlag (37) an einem Kreisring (54) und an einem Radialflansch (52) befestigt ist, die ein hinteres Ende des Lufteinlassstruktur (20) des Rumpfs bilden.

6. Antriebseinheit nach Anspruch 5, bei der Radial- und Axialregelkeile (60, 62) zwischen dem vorderen Anschlag (37) und dem Kreisring (54) bzw. zwischen dem vorderen Anschlag und dem Radialflansch (52) eingefügt sind.

7. Antriebseinheit nach einem der vorhergehenden Ansprüche, bei der dann, wenn die Verriegelungsmittel (32a, 32b) nicht verriegelt sind, die vorderen Führungsmittel (36, 37) die Hauben (22) in einer natürlichen Position halten, die von der geschlossenen Position wesentlich verschieden ist, und in der die aneinander angrenzenden Ränder (22b) der Hauben sichtbar voneinander beabstandet sind.

8. Antriebseinheit nach Anspruch 7 in Kombination mit einem der Ansprüche 2 bis 6, bei der die natürliche Position der Hauben (22) durch einen Schwerkraftkontakt zwischen jeder vorderen Führung (36) und dem vorderen Anschlag (37) derart definiert ist, dass ein Übergang in die geschlossene Position die Ausübung einer Kraft in Umfangsrichtung zwischen den Hauben (22) durch die Verriegelungsmittel (32a, 32b) erfordert.

9. Antriebseinheit nach einem der vorhergehenden Ansprüche, bei der hintere Führungsmittel (38, 70) zwischen den Hauben (22) und einem zweiten Element eingefügt sind, das vom Motor (14) oder von einem hinteren Bereich (24) des Rumpfs getragen wird, und zwar in der Nähe der Verriegelungsmittel (32a, 32b) und eines hinteren Rands (22c) der Hauben, derart, dass sie einer Relativverlagerung zwischen den Hauben und dem Motor radial bezüglich der Längsachse entgegenwirken, wenn die Hauben in der geschlossenen Position sind.

10. Antriebseinheit nach Anspruch 9, bei der die hinteren Führungsmittel einen hinteren Anschlag (70) umfassen, der fest mit dem zweiten Element verbunden ist, das vom Motor (14) oder vom hinteren Bereich (24) getragen wird, sowie eine hintere Führung (38), die fest mit jeder der Hauben (22) verbunden ist, wobei jede hintere Führung automatisch mit dem hinteren Anschlag zusammenwirkt, wenn die Verriegelungsmittel (32a, 32b) in der geschlossenen Position sind.

11. Antriebseinheit nach Anspruch 10, bei der der hintere Anschlag (70) an Umkehrerhauben (24) befestigt ist, die den hinteren Bereich des Rumpfs bilden.

12. Antriebseinheit nach Anspruch 10, bei der der hintere Anschlag (70) an einem Gebläsering (26) des Motors (14) befestigt ist.

## Claims

1. Aircraft propulsion system, comprising an engine (14), a pod placed round the engine in accordance with a common longitudinal axis, and a strut supporting the engine, the pod including two cowls (22) having a C-shaped cross-section, articulated to the strut and which can be connected to one another, in the closed position, by locking means (32a, 32b), **characterized in that** front guide means (36, 37) are interposed between the cowls and a part carried by the engine (140 or by an air intake structure (20) of the pod, in the vicinity of the locking means (32a, 32b) and a front edge (22a) of the cowls, so as to oppose a relative displacement between the cowls and the engine, axially and radially with respect to said longitudinal axis, when the cowls are in the closed position.

2. Propulsion system according to claim 1, wherein the front guide means comprise at least one front thrust bearing (37) integral with the part carried by the engine (14) or by the air intake structure (20), and a front guide (36) integral with each of the cowls (22), each front guide (36) automatically cooperating with the front thrust bearing (37) when the cowls (22) are in the closed position.

3. Propulsion system according to claim 2, wherein the front guide means comprise two front thrust bearings (37) integral with the part carried by the engine (14) or by the air intake structure (20), each front guide (36) cooperating with one of said thrust bearings when the cowls (22) are in the closed position.

4. Propulsion system according to claim 2, wherein the front guide means comprise a single front thrust bearing (37) integral with the part carried by the engine (14) or by the air intake structure (20).

5. Propulsion system according to any one of the claims 2 to 4, wherein the front thrust bearing (37) is fixed to a circular collar (54) and to a radial flange (520 materializing a rear end of the air intake structure (20) of the pod.

6. Propulsion system according to claim 5, wherein radial and axial adjusting shims (60, 62) are respectively interposed between the front thrust bearing (37) and the circular collar (54) and between the front thrust bearing and the radial flange (52).

7. Propulsion system according to any one of the preceding claims, wherein, when the locking means (32a, 32b) are not locked, the front guide means (36, 37) maintain the cowls (22) in a natural position, differing significantly compared with the closed position, in which adjacent edges (22b) of the cowls are visibly spaced from one another.

8. Propulsion system according to claim 7, combined with any one of the claims 2 to 6, wherein the natural position of the cowls (22) is defined by a contact by gravity between each front guide (36) and the front thrust bearing (37), so that a passage into the closed position requires the application of a circumferential force between the cowls by the locking means (32a, 32b).

9. Propulsion system according to any one of the preceding claims, wherein rear guide means (38, 70) are interposed between the cowls (22) and a second part carried by the engine (14) or by a rear part (24) of the pod, in the vicinity of the locking means (32a, 32b) and a rear edge (22c) of the cowls, so as to oppose a relative displacement between the cowls and the engine, radially with respect to the longitudinal axis, when the cowls are in the closed position.

10. Propulsion system according to claim 9, wherein the rear guide means comprise a rear thrust bearing (70), integral with the second part carried by the engine (14) or by the rear part (24), and a rear guide (38) integral with each of the cowls (22), each rear guide automatically cooperating with the rear thrust bearing when the locking means (32a, 32b) are in the closed position.

11. Propulsion system according to claim 10, wherein the rear thrust bearing (70) is fixed to reversing cowls (24) materializing the rear part of the pod.

12. Propulsion system according to claim 10, wherein the rear thrust bearing (70) is fixed to a fan collar (26) of the engine (14).
